# FASCICULE DE BREVET EUROPEEN

(11) **EP 3 032 450 B1**
(45) Date de publication et mention de la délivrance du brevet: **25.03.2020**
(21) Numéro de dépôt: 15196381.6
(22) Date de dépôt: 25.11.2015
(51) Int. Cl.: G06F 21/44, G06Q 20/34, G06Q 20/38, G06Q 20/40, G07F 7/08

(54) **PROCÉDÉ DE CONTRÔLE D'UNE AUTHENTICITÉ D'UN TERMINAL DE PAIEMENT ET TERMINAL AINSI SÉCURISÉ**
VERFAHREN ZUR KONTROLLE DER AUTHENTIZITÄT EINES ZAHLUNGSTERMINALS, UND SO GESICHERTES TERMINAL
METHOD FOR CHECKING THE AUTHENTICITY OF A PAYMENT TERMINAL AND TERMINAL THUS SECURED

(30) Priorité: 09.12.2014 FR 1462139
(43) Date de publication de la demande: 15.06.2016
(73) Titulaire: Ingenico Group, 75015 Paris (FR)
(72) Inventeur: NACCACHE, David, 75018 Paris (FR); SARRADIN, Jean-Louis, 07300 ETABLES (FR)
(74) Mandataire: Vidon Brevets & Stratégie

(56) Documents cités:
- EP-A1- 2 065 836
- FR-A1- 2 824 659
- US-B1- 8 538 863

## Description

### 1. Domaine

La technique proposée se rapporte au domaine des terminaux de paiement. La technique proposée se rapporte plus particulièrement à la sécurisation des terminaux de paiement.

### 2. Art Antérieur

Les terminaux de paiement font l'objet de nombreuses tentatives d'attaques. En effet, de par la nature des informations qu'il contient et de par la sensibilité des données qu'il traite, le terminal de paiement est un objet qui possède une grande valeur pour des personnes malveillantes. Un certain type de fraude temps à prendre de l'ampleur : il s'agit de substituer un terminal de paiement valide par un terminal de paiement contrefait. Le terminal de paiement valide est substitué dans un commerce et immédiatement remplacé par un terminal de paiement qui une apparence de validité, mais qui en réalité soit a été modifié, par exemple pour lire et copier les données des cartes bancaires des clients, soit à complètement et vidé de son contenu, lequel a été remplacé par un simple matériel de lecture et d'enregistrement de données de clients. Le commerçant non avisé peut aisément être dupé et ne pas se rendre compte de la fraude avant plusieurs jours.

Une manière pour résoudre ce problème de remplacement peut consister en l'application d'un marquage sur le terminal. Un tel marquage permet au commerçant de se rendre compte de la substitution de son terminal. Cette technique est efficace à partir du moment où le fraudeur n'est pas lui-même en mesure de reproduire ce marquage. Cette technique est donc limitée par la capacité du fraudeur à reproduire le marquage. Or, pour qu'un marquage soit efficace, il doit être visible. S'il est visible, ce marquage est également visible par le fraudeur qui peut donc aisément le reproduire. Ainsi, cette solution simple d'application d'un marquage n'est en réalité pas réellement efficace.

Une autre manière de résoudre ce problème est de ne disposer que de terminaux de paiement filaires, c'est à dire de terminaux de paiement connectés physiquement à une caisse enregistreuse par exemple. Cette solution est certes efficace, mais en réalité elle est peu adaptée à la pratique actuelle qui consiste à offrir une plus grande mobilité aux commerçants et aux clients. Néanmoins, cette technique est utilisée par exemple dans les grandes surfaces ou dans certains types de magasins.

Les techniques existantes sont néanmoins limitées lorsqu'il s'agit de prévenir ou d'empêcher la réalisation de la fraude dans des commerces de moindre envergure. Il existe donc un besoin de fournir une technique qui permette au commerçant de détecter une fraude par substitution de terminal et qui permette de se prémunir des effets négatifs d'une telle fraude.

La publication de la demande de brevet français FR2824659 A1 décrit un procédé de vérification de l'intégrité d'un terminal lors d'une transaction utilisant une carte à mémoire, le procédé comprend les étapes de :- foumiture au titulaire de la carte à mémoire d'un cryptogramme calculé en utilisant des informations lisibles dans la mémoire de la carte;- lors d'une transaction, lecture par le terminal d'informations dans la mémoire de la carte et calcul par le terminal d'un cryptogramme en utilisant les informations lues dans la mémoire de la carte; et- affichage par le terminal à destination du titulaire de la carte du cryptogramme calculé. Le titulaire de la carte à mémoire peut ainsi comparer le cryptogramme fourni par le terminal au cryptogramme qui lui a été fourni. Ceci lui permet de supposer que le terminal est intègre, et n'a pas fait l'objet de manipulations frauduleuses.

### 3. Résumé

La technique proposée ne présente pas ces inconvénients de l'art antérieur. Plus particulièrement, la technique proposée se rapporte à une méthode de vérification d'une authenticité d'un terminal de paiement comprenant une étape d'obtention d'au moins une information externe audit terminal de paiement et au moins une étape de traitement de ladite information externe, ladite étape de traitement délivrant une information chiffrée et une étape de comparaison de l'information chiffrée obtenue avec au moins une information correspondante, inaccessible pour la terminal de paiement.

Ainsi, la comparaison entre l'information chiffrée obtenue à partir du terminal de paiement et la donnée de référence correspondant à cette information chiffrée permet de vérifier si le terminal de paiement est un terminal authentique ou s'il s'agit d'un terminal compromis. Il ne s'agit pas, dans cette divulgation, de vérifier une identité du terminal de paiement (par exemple un numéro de série chiffré ou une autre donnée de ce type), mais de lancer un défi au terminal de paiement et de vérifier si le terminal de paiement est à même de produire une réponse correcte à ce défi. Si le terminal n'est pas à même de relever le défi ou alors si le résultat de ce défi est mauvais, on détecte alors simplement que le terminal est un « fake », c'est-à-dire que le terminal est modifié.

Plus spécifiquement, la technique décrite se rapporte à un Procédé de traitement d'une donnée initiale tel que revendiqué à la revendication 1.

Ainsi, de manière simple, l'utilisateur est en mesure de prendre connaissance de deux aspects de sécurisation importants que sont d'une part la capacité de terminal à répondre au défi qui lui est lancé : si le terminal n'est pas en mesure d'obtenir l'information externe, alors on en déduit immédiatement que le terminal est compromis. Par ailleurs, si le terminal est en mesure de comprendre qu'un défi lui est lancé, alors on obtient une restitution du résultat du défi.

Selon une caractéristique particulière, postérieurement à ladite étape de restitution de ladite donnée traitée, une étape de vérification d'une concordance entre ladite donnée traitée et une donnée de référence.

Ainsi la restitution du défi (lancé au terminal) est comparée avec une information de référence en possession du commerçant (par exemple une carte spécifique comprenant le résultat du défi). Si le résultat fourni par le terminal est différent de cette donnée de référence, on peut en conclure que le terminal est compromis.

Selon une caractéristique particulière, ladite étape d'obtention met en œuvre
- un lecteur de carte à puce.

Par rapport à d'autres techniques (comme par exemple une saisie au clavier), il y a deux avantages : d'une part le commerçant ne connaît pas lui-même le défi lancé au terminal ; d'autre part, le lecteur de carte à puce, compte tenu de la nature du terminal, est extrêmement bien sécurisé : il est donc très difficile, pour un attaquant, de tenter d'obtenir cette donnée initiale avant de subtiliser le terminal chez le commerçant pour le modifier et le compromettre.

Selon une caractéristique particulière, ladite étape de traitement de ladite donnée initiale comprend une étape de chiffrement de ladite donnée initiale.

Ainsi, à la différence de techniques antérieures qui se contentent de déchiffrer une identité (comme un numéro de série) qui est chiffré au sein du terminal, la présente technique chiffre l'information transmise. Dès lors le terminal n'a pas besoin de connaître une information complémentaire : il utilise une information qu'il possède déjà (une clé de chiffrement) pour transformer, au moins en partie, la donnée initiale.

Selon une caractéristique particulière, ladite étape de chiffrement est une étape de hachage de ladite donnée initiale à l'aide d'une clé privée enregistrée au sein d'une mémoire sécurisée du terminal de paiement.

Ainsi, l'obtention de la donnée traitée est simple et rapide.

Selon une caractéristique particulière, ladite étape de restitution comprend une étape d'impression de la donnée traitée, à l'aide d'une imprimante dudit terminal de paiement.

Selon un autre aspect, la technique décrite se rapporte également à un terminal de paiement tel que revendiqué à la revendication 7.

L'invention se rapporte également à un dispositif de contrôle tel que revendiqué à la revendication 9.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée ;
- la figure 2 explicite la phase de traitement de l'information initiale ;
- la figure 3 décrit un dispositif de contrôle et de vérification d'authenticité ;
- la figure 4 décrit un terminal de paiement intégrant un élément de vérification d'authenticité.

### 5. Description

### 5.1. Rappel du principe

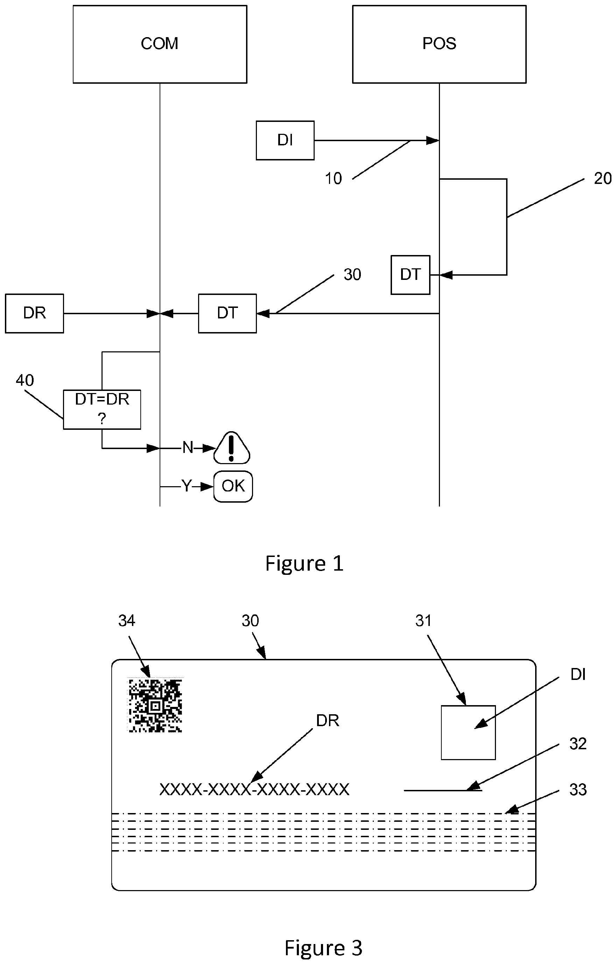

Le commerçant confronté au vol et à la modification d'un ou plusieurs terminaux de paiement subit souvent une perte financière importante. Dès lors, il est nécessaire de fournir à ce commerçant un moyen simple et efficace de vérification de l'authenticité du terminal qu'il détient. Pour ce faire, la technique présentement divulguée propose de comparer le résultat d'une opération interne réalisée par le terminal de paiement avec un résultat attendu (donnée de référence), préalablement connu du commerçant. Si la donnée de référence est identique à l'opération interne effectuée par le terminal, on considère que le terminal n'est pas compromis. Le résultat attendu (donnée de référence) peut prendre diverses formes, la plus simple étant, du point de vue du traitement à réaliser, une suite de caractères numériques ou alphanumériques. D'autres formes de résultats attendus peuvent également être implémentées, comme des images, des sons. Le principe général de la technique proposée est décrit en relation avec la figure 1.

D'une manière générale, la méthode proposée, mise en œuvre par un terminal de paiement (POS), comprend:
- une étape d'obtention (10) d'au moins une information externe audit terminal de paiement, dite donnée initiale (DI);
- une étape de traitement (20) de ladite donnée initiale (DI), délivrant une donnée traitée (DT);
- une étape de restitution visuelle et/ou sonore (30) de ladite donnée traitée (DT).

Postérieurement à la restitution par le terminal de paiement de la donnée traitée, le commerçant (COM) effectue une comparaison (40) de cette donnée traitée (DT) avec une donnée de référence (DR) correspondante en sa possession. Lorsque la donnée de référence diffère de la donnée traitée restituée par le terminal de paiement, le commerçant peut en déduire que le terminal de paiement est compromis (c'est à dire que le terminal de paiement a subi une modification non autorisée). Lorsque la donnée de référence est égale à la donnée traitée, la compromission du terminal de paiement n'est pas avérée et le commerçant peut utiliser celui-ci avec un degré de confiance raisonnable.

Dans au moins un mode de réalisation, pour être plus efficace, postérieurement à la restitution de la donnée traitée par le terminal, celui-ci attend, de la part du commerçant, la confirmation que la donnée traitée est identique à la donnée de référence. Cette confirmation peut prendre la forme d'une pression sur une touche du terminal de paiement. Le terminal de paiement peut alors fonctionner normalement.

Dans au moins un mode de réalisation de la technique proposé, le terminal de paiement ne peut réaliser de transaction lorsque la vérification de l'authenticité du terminal n'a pas été effectuée. Il est connu que lors de sa mise en route (par exemple journalière), le terminal de paiement effectue des vérifications de routine nécessaires à son fonctionnement. Dans ce mode de réalisation, on propose d'ajouter la vérification divulguée dans la présente technique. Cette vérification devient alors obligatoire. Sans cette vérification le terminal ne peut fonctionner. Elle consiste à requérir, au démarrage, la fourniture de l'information externe. Si le commerçant est à même de fournir cette information externe, alors le terminal met en œuvre la technique de vérification préalablement décrite.

Si le commerçant (ou toute autre personne) n'est pas en mesure de fournir la donnée initiale ou qu'il ne confirme pas que la donnée traitée est identique à la donnée de référence (cf. mode de réalisation précédent), le terminal ne démarre pas.

Dans au moins un mode de réalisation de la technique proposée, le terminal de paiement dispose, au choix, d'au moins deux méthodes d'obtention de l'information externe. Dans ce mode de réalisation, le terminal de paiement est seul à décider de la manière dont l'information externe doit être obtenue. Dans ce mode de réalisation, le premier mode d'obtention de l'information externe est par exemple l'insertion d'une carte de vérification (carte à puce ou carte à bande) spécifiquement prévue à cet effet. Le deuxième mode d'obtention de l'information externe est par exemple la saisie, à l'aide du clavier du terminal de paiement, d'une série de données numériques ou alphanumériques. De manière complémentaire, cette série de données numériques ou alphanumériques est imprimée sur la carte de vérification. Un troisième mode d'obtention peut par exemple consister en une capture (à l'aide d'un lecteur de code à barre), d'un code à barre en deux dimensions contenant l'information externe. Le terminal de paiement décide, alternativement et au hasard, d'utiliser l'une ou l'autre des méthodes d'obtention à sa disposition. Ainsi, le commerçant peut constater, visuellement, la discontinuité des requêtes d'obtention du terminal de paiement et avoir immédiatement, avant même la saisie, une information susceptible de renseigner le commerçant sur le bon fonctionnement du terminal : il n'est en effet très peu probable que le terminal requiert l'obtention de l'information externe de manière identique à chaque vérification. Dès lors, avec ce mode de réalisation on augmente encore le niveau de sécurisation. Cependant un tel mode de mise en œuvre de la technique décrite, devrait être réservé à certains types d'environnements particulièrement difficile, susceptible de faire face à de nombreuses attaques de la part de fraudeurs.

### 5.2. Description d'un mode de réalisation

Comme indiqué préalablement, la technique proposée consiste à offrir la possibilité, par exemple au commerçant ou à toute autre personne en charge de la gestion des terminaux de paiement, de vérifier si le terminal de paiement est un terminal authentique ou si c'est un terminal compromis (i.e. qui a par exemple été subtilisé et modifié).

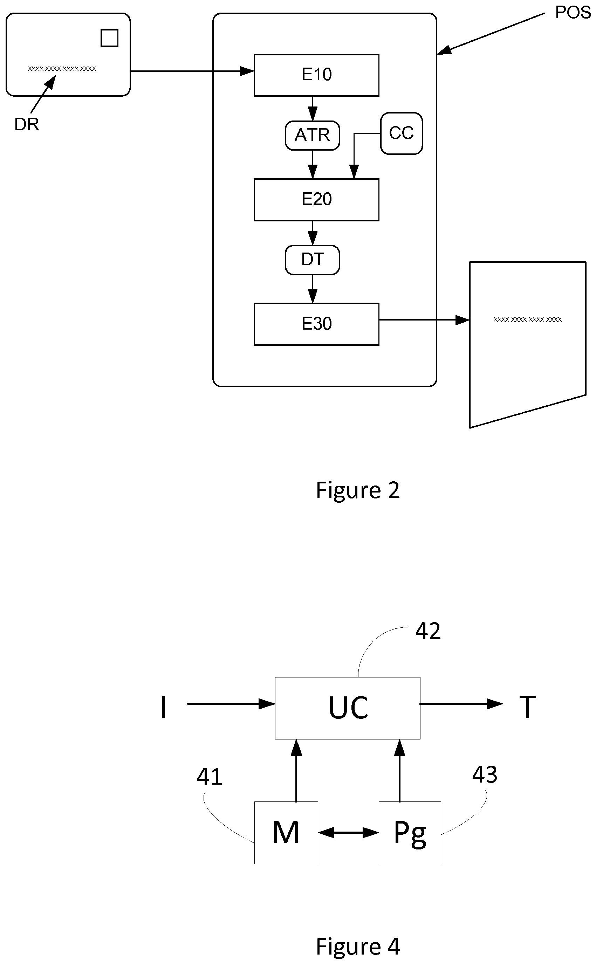

Dans ce mode de réalisation (simple) de la technique proposée, le commerçant dispose d'une carte, de préférence une carte à puce, de vérification d'authenticité. Le traitement dans ce mode de réalisation est présenté en relation avec la figure 2.

La carte de vérification est utilisée à deux moments : lors de l'obtention de l'information externe, la carte (Crd) est insérée (E10) dans le terminal (POS); plus spécifiquement l'information externe est encodée dans la carte (soit dans la puce de la carte, soit sur la bande magnétique de celle-ci); le deuxième moment au cours duquel la carte (Crd) est utilisée est lors de la vérification (E40), par le commerçant : la donnée de référence (DR) est imprimée sur la carte (Crd). Dès lors il est aisé, pour le commerçant, de comparer la donnée de référence à la donnée restituée par le terminal de paiement.

Dans ce mode de réalisation, pour plus de facilité pour le commerçant, la restitution (E30) de donnée traitée (DT) est effectuée en réalisant une impression (E31) de cette information (DT) sur un reçu. Ce reçu, appelé reçu de vérification, est imprimé par l'imprimante du terminal de paiement. Alternativement, si le terminal ne possède pas d'imprimante, la donnée traitée est affichée sur l'écran du terminal de paiement. L'avantage de disposer d'un reçu imprimé réside dans l'absence de nécessité de conserver le terminal en main pour effectuer une vérification et donc une absence de nécessité de vérifier qu'un contrôle du terminal est effectué.

Dans ce mode de réalisation, l'information externe (donnée initiale) fournie au terminal par la carte est l'ATR (de l'Anglais pour *"Answer to Reset"*)*.* L'ATR est la réponse à réinitialisation. Une réponse à une réinitialisation (ATR) est un message de sortie par un contact de carte à puce conforme à la norme ISO 7816 / CEI, après réinitialisation électrique de la puce de la carte par le terminal de paiement. L'ATR transmet des informations sur les paramètres de communication proposés par la carte, et la nature et l'état de la carte. Un exemple d'ATR est "3B 02 14 50". Cette information externe n'est pas disponible pour le terminal. Elle dépend de la carte. Ainsi, l'avantage de l'utilisation de l'ATR, par rapport à d'autres informations, est que l'on forme un couple « carte/terminal ». Ainsi, une caractéristique intéressante, dans le cadre de la présente technique est de disposer d'une donnée initiale relativement unique, dont on peut assurer que la connaissance et la reproduction par un attaquant est très difficile à obtenir sans voler la carte.

Lorsque le terminal est en possession de cette donnée initiale, il applique sur celle-ci un traitement informatique. Ce traitement a pour objectif de transformer la donnée initiale (DI) qui est l'ATR en une donnée qui peut être comparée (DR). L'intérêt est de rendre cette transformation propre au terminal de paiement qui l'effectue : cela signifie qu'un terminal qui est compromis ne fournira pas le même résultat qu'un terminal authentique.

Plusieurs possibilités de transformation peuvent être utilisées. Une possibilité intéressante est d'appliquer (E20) une fonction de hachage sur l'ATR à l'aide d'une clé privée (CC) du terminal de paiement. L'avantage procuré par cette solution est que la clé privée du terminal de paiement ne peut pas être compromise, même si ce terminal devait être volé et modifié : il existe en effet des mécanismes de protection internes au terminal qui entrainent un effacement de la mémoire sécurisée du terminal lorsqu'une tentative d'ouverture ou de modification du terminal est détectée.

Dès lors, même si le terminal est substitué, modifié et rendu au commerçant sans que celui-ci ne s'aperçoive de la disparition momentanée du terminal, la modification effectuée aura nécessairement entrainé un effacement de la mémoire sécurisée du terminal. Comme c'est cette mémoire qui contient les clés publiques et privées du terminal, on est assuré que le terminal compromis qui est rendu au commerçant ne dispose plus des mêmes clés que lorsqu'il a été subtilisé. Ainsi, le résultat de la fonction de hachage effectué sur l'ATR de la carte sera forcément différent du résultat non compromis. Le commerçant peut ainsi s'apercevoir rapidement que son terminal a été compromis.

De manière complémentaire, une rotation binaire de la donnée initiale est effectuée avant l'opération de chiffrement. Cette rotation binaire est effectuée selon un paramètre de rotation binaire prédéterminé, qui est propre au terminal. Le paramètre de rotation binaire est injecté dans la mémoire sécurisé du terminal, de manière aléatoire, au moment de sa fabrication et/ ou de sa configuration en sortie de chaine de fabrication. Ainsi, le paramètre de rotation binaire est potentiellement différent d'un terminal à un autre, ce qui rend encore plus difficile une falsification du terminal car en plus de l'obtention des clés de chiffrement, l'attaquant doit également se procurer le paramètre de rotation binaire.

### 5.3. Autres caractéristiques et avantages

Selon un autre aspect, la technique décrite se rapporte également à un dispositif de vérification de l'authenticité du terminal, présenté en relation avec la figure 3. Plus particulièrement, la divulgation porte aussi sur un dispositif de vérification externe (30) comprenant d'une part la donnée initiale (DI) et d'autre part la donnée de référence (DR).

Dans l'invention, le dispositif externe se présente sous la forme d'une carte à puce, comprenant d'une part la donnée de référence, embossée sur la carte et comprenant d'autre part une puce dont l'unique fonction est de disposer d'une donnée spécifique, dite donnée initiale, obtenue après une réinitialisation de la carte par le terminal de paiement. Dans ce cas, cette donnée comprise dans la carte à puce est une réponse à une réinitialisation (ATR). Dans l'invention, la méthode présentée proposée comprend, de la part du terminal, une étape de réinitialisation de la carte à puce insérée dans le lecteur de carte à puce du terminal de paiement.

On décrit, en relation avec la figure 4, un terminal de paiement comprenant des moyens permettant l'exécution du procédé décrit préalablement.

Par exemple, le terminal de paiement comprend une mémoire 41 constituée d'une mémoire tampon, une unité de traitement 42, équipée par exemple d'un microprocesseur, et pilotée par le programme d'ordinateur 43, mettant en œuvre nécessaires à la mise en œuvre des fonctions de paiement.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée par exemple une donnée externe au terminal, dite donnée initiale. Le microprocesseur de l'unité de traitement 42 met en œuvre les étapes du procédé de vérification de l'authenticité, selon les instructions du programme d'ordinateur 43 pour permettre au commerçant de vérifier l'authenticité du terminal.

Pour cela, le terminal de paiement comprend, outre la mémoire tampon 41, des moyens d'obtention d'une information externe audit terminal de paiement, dite donnée initiale ; ces moyens se présentent sous la forme d'un lecteur de carte à puce. Le terminal comprend également des moyens de traitement, notamment cryptographique de la donnée initiale pour délivrer une donnée traitée ; ces moyens de traitement comprennent par exemple un processeur de sécurité ou un processeur de chiffrement; le terminal comprend également un ou plusieurs jeux de clés de chiffrements afin de réaliser le traitement de la donnée initiale et fournir une donnée traitée qui puisse être comparée avec une donnée de référence. Pour que la donnée traitée puisse être comparée, le terminal comprend également des moyens de restitution de cette donnée traitée. Ces moyens de restitution se présentent par exemple sous la forme d'une imprimante papier, pouvant imprimer, sur un reçu, la donnée traitée. Ces moyens de restitution se présentent également par exemple sous la forme d'une interface homme-machine spécifique, affichée sur l'écran du terminal, qui affiche la donnée traitée.

Ces moyens peuvent être pilotés par le processeur de l'unité de traitement 42 en fonction du programme d'ordinateur 43.

## Revendications

1. Procédé de traitement d'une donnée initiale, pour autoriser un contrôle de l'authenticité d'un terminal de paiement à l'aide de ladite donnée initiale, le procédé réalisant au sein dudit terminal de paiement :
- une étape d'obtention (10) d'au moins une information externe audit terminal de paiement, dite donnée initiale (DI), ladite donnée initiale (DI) étant une réponse à réinitialisation (ATR) transmise par une carte à puce postérieurement à son insertion au sein dudit terminal de paiement;
- une étape de traitement cryptographique (20) de ladite donnée initiale (DI), délivrant une donnée traitée (DT);
- une étape de restitution visuelle et/ou sonore (30) de ladite donnée traitée (DT).

2. Procédé de traitement selon la revendication 1, lequel comprend en outre, postérieurement à ladite étape de restitution (30) de ladite donnée traitée (DT), une étape de vérification (40), par un utilisateur dudit terminal de paiement, d'une concordance entre ladite donnée traitée (DT) et une donnée de référence (DR).

3. Procédé de traitement selon la revendication 1, dans lequel ladite étape d'obtention (10) met en œuvre
- un lecteur de carte à puce.

4. Procédé de traitement selon la revendication 1, dans lequel ladite étape de traitement (20) de ladite donnée initiale (DI) comprend une étape de chiffrement de ladite donnée initiale.

5. Procédé de traitement selon la revendication 4, dans lequel ladite étape de chiffrement est une étape de hachage de ladite donnée initiale à l'aide d'une clé privée enregistrée au sein d'une mémoire du terminal de paiement.

6. Procédé de traitement selon la revendication 1, dans lequel ladite étape de restitution comprend une étape d'impression de ladite donnée traitée, à l'aide d'une imprimante dudit terminal de paiement.

7. Terminal de paiement configuré pour vérifier son authenticité à l'aide d'une donnée initiale, le terminal de paiement comprenant:
- un module configuré pour obtenir au moins une information externe audit terminal de paiement, dite donnée initiale (DI), ladite donnée initiale (DI) étant une réponse à réinitialisation (ATR) transmise par une carte à puce postérieurement à son insertion au sein dudit terminal de paiement;
- un module configuré pour traiter cryptographiquement ladite donnée initiale (DI) et délivrer une donnée traitée (DT);
- un module configuré pour restituer de manière visuelle et/ou sonore ladite donnée traitée (DT).

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1, lorsqu'il est exécuté sur un processeur.

9. Dispositif de contrôle configuré pour effectuer un contrôle d'authenticité d'un terminal de paiement, le dispositif de contrôle étant une carte à puce comprenant :
- une information externe audit terminal de paiement, dite donnée initiale (DI), ladite donnée initiale étant apte à être transmise audit terminal de paiement par l'intermédiaire d'une interface de communication, ladite donnée initiale (DI) étant une réponse à réinitialisation (ATR) transmise par ledit dispositif de contrôle postérieurement à son insertion au sein dudit terminal de paiement ;
- une donnée de référence (DR), inscrite sur une face visible dudit dispositif de contrôle, destinée à être utilisée pour effectuer une vérification d'une concordance entre une donnée traitée (DT), obtenue par le terminal de paiement à partir d'un traitement cryptographique de ladite donnée initiale (DI), et ladite donnée de référence (DR).

## Patentansprüche

1. Verfahren zum Verarbeiten einer Ausgangsdateneinheit, um eine Kontrolle der Authentizität eines Zahlungsterminals mit Hilfe von der Ausgangsdateneinheit zu genehmigen, wobei das Verfahren innerhalb des Zahlungsterminals ausführt:
- einen Schritt des Erhaltens (10) mindestens einer Information außerhalb des Zahlungsterminals, die Ausgangsdateneinheit (DI) genannt wird, wobei die Ausgangsdateneinheit (DI) eine Antwort auf ein Zurücksetzen (ATR) ist, die von einer Chipkarte nach ihrem Einfügen in das Zahlungsterminal gesendet wird,
- einen Schritt der kryptographischen Verarbeitung (20) der Ausgangsdateneinheit (DI), der eine verarbeitete Dateneinheit (DT) bereitstellt,
- einen Schritt der visuellen und/oder akustischen Wiedergabe (30) der verarbeiteten Dateneinheit (DT) .

2. Verfahren zum Verarbeiten nach Anspruch 1, das ferner nach dem Schritt der Wiedergabe (30) der verarbeiteten Dateneinheit (DT) einen Schritt des Überprüfens (40) durch einen Benutzer des Zahlungsterminals einer Übereinstimmung zwischen der verarbeiteten Dateneinheit (DT) und einer Referenzdateneinheit (DR) aufweist.

3. Verfahren zum Verarbeiten nach Anspruch 1, wobei der Schritt des Erhaltens (10) einen Chipkartenleser einsetzt.

4. Verfahren zum Verarbeiten nach Anspruch 1, wobei der Schritt der Verarbeitung (20) der Ausgangsdateneinheit (DI) einen Schritt des Verschlüsselns der Ausgangsdateneinheit aufweist.

5. Verfahren zum Verarbeiten nach Anspruch 4, wobei der Schritt des Verschlüsselns ein Schritt des Hashings der Ausgangsdateneinheit mit einem privaten Schlüssel ist, der in einem Speicher des Zahlungsterminals gespeichert wird.

6. Verfahren zum Verarbeiten nach Anspruch 1, wobei der Schritt der Wiedergabe einen Schritt des Druckens der verarbeiteten Dateneinheit mit einem Drucker des Zahlungsterminals aufweist.

7. Zahlungsterminal, das konfiguriert ist, um seine Authentizität mit Hilfe von einer Ausgangsdateneinheit zu kontrollieren, wobei das Zahlungsterminal aufweist:
- ein Modul, das konfiguriert ist, um mindestens eine Information außerhalb des Zahlungsterminals, die Ausgangsdateneinheit (DI) genannt wird, zu erhalten, wobei die Ausgangsdateneinheit (DI) eine Antwort auf ein Zurücksetzen (ATR) ist, die von einer Chipkarte nach ihrem Einfügen in das Zahlungsterminal gesendet wird,
- ein Modul, das konfiguriert ist, um die Ausgangsdateneinheit (DI) kryptographisch zu verarbeiten und eine verarbeitete Dateneinheit (DT) bereitzustellen,
- ein Modul, das konfiguriert ist, um die verarbeitete Dateneinheit (DT) visuell und/oder akustisch wiederzugeben.

8. Computerprogrammprodukt, das von einem Kommunikationsnetz heruntergeladen werden kann und/oder auf einem computerlesbaren Medium gespeichert und/oder von einem Mikroprozessor ausgeführt werden kann, **dadurch gekennzeichnet, dass** es Programmcodeanweisungen für das Ausführen eines Verfahren zum Verarbeiten nach Anspruch 1 aufweist, wenn es auf einem Prozessor ausgeführt wird.

9. Kontrollvorrichtung, die konfiguriert ist, um eine Kontrolle der Authentizität eines Zahlungsterminals durchzuführen, wobei die Kontrollvorrichtung eine Chipkarte ist, umfassend:
- eine Information außerhalb des Zahlungsterminals, die Ausgangsdateneinheit (DI) genannt wird, wobei die Ausgangsdateneinheit geeignet ist, über eine Kommunikationsschnittstelle an ein Zahlungsterminal gesendet zu werden, wobei die Ausgangsdateneinheit (DI) eine Antwort auf ein Zurücksetzen (ATR) ist, die von der Kontrollvorrichtung nach ihrem Einfügen in das Zahlungsterminal gesendet wird,
- eine Referenzdateneinheit (DR), die auf einer sichtbaren Seite der Kontrollvorrichtung eingeschrieben ist, die dazu bestimmt ist, verwendet zu werden, um ein Überprüfen einer Übereinstimmung zwischen der verarbeiteten Dateneinheit (DT), die von dem Zahlungsterminal ausgehend von einer kryptographischen Verarbeitung der Ausgangsdateneinheit (DI) erhalten ist, und der Referenzdateneinheit (DR) durchzuführen.

## Claims

1. Method for processing a piece of initial data, to authorize a verification of the authenticity of a payment terminal by means of said piece of initial data, the method carrying out, within said payment terminal:
- a step (10) for obtaining at least one piece of information external to said payment terminal, called a piece of initial data (DI), said piece of initial data (DI) being an answer to a reset (ATR) transmitted by a smartcard subsequently to its insertion into the payment terminal;
- a step (20) of cryptographic processing of said piece of initial data (DI), delivering a piece of processed data (DT);
- a step (30) of visual and/or sound rendering of said piece of processed data (DT).

2. Method for processing according to claim 1, the method further comprising, subsequently to said step (30) for rendering said piece of processed data (DT), a step (40) for verifying, by a user of said payment terminal, a correlation between said piece of processed data (DT) and a piece of reference data (DR).

3. Method for processing according to claim 1, wherein said step (10) for obtaining implements a smartcard reader.

4. Method for processing according to claim 1, wherein said step (20) for processing said piece of initial data (DI) comprises a step for encrypting said piece of initial data.

5. Method for processing according to claim 4, wherein said step for encrypting is a step for hashing said piece of initial data by means of a private key recorded within a memory of the payment terminal.

6. Method for processing according to claim 1, wherein said step of rendering comprises a step for printing the piece of processed data by means of a printer of said payment terminal.

7. Payment terminal configured to verify its authenticity by means of a piece of initial data, the payment terminal comprising:
- a module configured to obtain at least one piece of information external to said payment terminal, called a piece of initial data (DI), said piece of initial data (DI) being an answer to a reset (ATR) transmitted by a smartcard subsequently to its insertion into the payment terminal;
- a module configured to process cryptographically said piece of initial data (DI) and deliver a piece of processed data (DT);
- a module configured to render said piece of processed data (DT) visually and/or by sound.

8. Computer program downloadable from a communications network and/or stored in a computer readable medium and/or executable by a microprocessor, **characterized in that** it comprises program code instructions to execute a method for processing according to claim 1 when the program is executed by a computer.

9. Control device configured to carry out a control of authenticity of a payment terminal, the control device being a smartcard comprising:
- a piece of information external to said payment terminal, called a piece of initial data (DI), said piece of initial data being capable of being transmitted to said payment terminal by means of a communications interface, said piece of initial data (DI) being an answer to a reset (ATR) transmitted by the control device subsequently to its insertion into the payment terminal;
- a piece of reference data (DR), recorded on a visible face of said control device, intended for being used to verify a correlation between a piece of processed data (DT), obtained by the payment terminal from a cryptographic processing of said piece of initial data (DI), and said piece of reference data (DR).
